# FASCICULE DE BREVET EUROPEEN

(11) **EP 0 424 251 B1**
(45) Date de publication et mention de la délivrance du brevet: **05.04.1995**
(21) Numéro de dépôt: 90402908.9
(22) Date de dépôt: 17.10.1990
(51) Int. Cl.: B32B 7/06, B32B 5/14, B65D 77/20

(54) **Feuille multicouche en matière plastique pour constituer des récipients destinés à être fermés par un opercule soudé, et récipients formés à partir de cette feuille**
Mehrschichtige Kunststoffolie zur Herstellung eines versiegelbaren Behälters, mit einem schweissbaren Deckel und daraus hergestellte Behälter
Multilayer plastic foil for making containers to be closed by means of a welded lid, and containers made thereof

(30) Priorité: 18.10.1989 FR 8913593
(43) Date de publication de la demande: 24.04.1991
(73) Titulaire: SIAMP-CEDAP (Société Anonyme Monégasque), MC-98000 Monaco (MC)
(72) Inventeur: Pinsolle, Francis, F-06230 Villefranche S/Mer (FR); Chaupin, Vincent, F-06800 Cagnes-sur-Mer (FR)
(74) Mandataire: Laget, Jean-Loup

(56) Documents cités:
- EP-A- 0 192 131
- EP-A- 0 207 626
- GB-A- 2 011 276
- PLASTE UND KAUTSCHUK, vol. 31, no. 8, 1984, pages 290-291; Z. FUNKE et al.:"Untersuchung des Gefüges von heterogenen Thermoplastgemischen"

## Description

L'invention concerne une feuille multicouche en matière plastique pour constituer des récipients destinés à être fermés par un opercule soudé.

La présente invention concerne aussi la réalisation de récipients formés à partir de cette feuille, par exemple à usage alimentaire, et destinés à être fermés par un opercule soudé sur leur face supérieure ouverte. Ces récipients sont par exemple les barquettes ou pots dans lesquels sont vendus des aliments tel que les desserts.

Ces récipients sont de manière usuelle thermoformés à partir d'une matière plastique en feuille présentant souvent plusieurs couches de matières différentes telles que du polystyrène, de l'éthylvinyl alcool (EVOH) et du polyéthylène, liées par des adhésifs.

Actuellement, les opercules se présentent sous la forme d'une feuille mince multicouche formée par exemple d'une feuille d'aluminium ou de polyester sur laquelle on a porté les inscriptions destinées à la clientèle, recouverte sur sa face devant être au contact avec le récipient d'une fine couche de polyéthylène.

C'est par cette fine couche de polyéthylène qu'est assurée la soudure de l'opercule sur le trottoir que présente le récipient autour de sa face ouverte.

Lorsque l'on analyse comment se réalise l'ouverture d'un récipient ainsi operculé, on s'aperçoit que dans de nombreux cas, celle-ci est laborieuse à effectuer.

En effet, la couche inférieure de l'opercule et la couche supérieure du récipient sont en polyéthylène et sont soudées l'une à l'autre. Pour que le récipient s'ouvre, il faut pouvoir rompre la liaison entre les deux couches soudées.

Dans certains cas, la soudure est très difficile à détruire et la force que l'on est amené à exercer sur l'opercule entraîne souvent le déchirement de l'opercule et donc la nécessité de saisir celui-ci par de petites surfaces.

Dans d'autres cas, la fine couche de polyéthylène reste soudée sur le récipient tandis que l'on a oté la ou les couches supérieures de l'opercule.

Le document EP-A-0 192 131 propose un emballage où deux pièces thermoplastiques sont soudées par l'entremise d'une couche déchirable à l'ouverture et comprenant un polymère choisi parmi les ionomères et l'EVA, et un autre polymère (LDPE, EVA, EVA modifié) en mélange intime.)

Ce problème des récipients operculés, n'a pas encore été convenablement et sûrement résolu. C'est pourquoi, la présente invention tend à proposer une solution nouvelle permettant d'obtenir une soudure de l'opercule qui soit étanche et suffisamment résistante aux différentes sollicitations auxquelles elle peut être soumise au cours de la commercialisation des récipients, tout en permettant d'enlever facilement l'opercule sans le déchirer.

L'invention a pour objet une feuille multicouche en matière plastique pour constituer des récipients, destinés à être fermés par un opercule soudé, constitué lui-même d'une feuille multicouche présentant une couche inférieure déstinée à être soudée sur la couche supérieure de ladite feuille, ladite couche supérieure étant une couche composite, constituée d'un mélange hétérogène de polyoléfine et de polystyrène à viscosités sensiblement différentes, dont le plus visqueux se répartit au milieu de la couche et le plus fluide sur la surface de la couche, ledit produit le plus fluide étant soudable sur la couche inférieure de l'opercule, de telle sorte que, lors de l'enlévement de l'opercule, la couche composite supérieure de la feuille se déchire dans son épaisseur par décohésion.

Lorsque la couche inférieure de l'opercule est en polyéthyléne, la couche composite comporte un polyéthylène plus fluide que le polystyrène.

L'invention a également pour objet un récipient en matière plastique formé à partir d'une feuille, caractérisé en ce que la couche supérieure composite de la feuille est constituée d'un mélange hétérogène de polyoléfine et de polystyrène, dont le plus fluide est compatible avec la couche inférieure de l'opercule pour assurer la soudure de l'opercule.

Selon d'autres caractéristiques de l'invention :
- La couche composite est constituée d'un mélange de polyoléfine et de polystyrène ayant des coefficients de viscosité différents.
- Le mélange comporte une polyoléfine et du polystyrène ou un copolymère du styrène dans des proportions comprises pour chacun entre 10% et 90%.

D'autres caractéristiques ressortent de la description qui suit faite avec référence au dessin annexé sur lequel on peut voir :
Fig. 1 : une vue en coupe de l'ensemble d'une feuille multicouche selon la présente invention, destinée à constituer des récipients, et d'une feuille multicouche classique desinée à constituer des opercules, après leur soudage ;
Fig. 2 : une vue en coupe de l'ensemble des deux feuilles de la Fig. 1 pendant l'ouverture de récipient operculé.

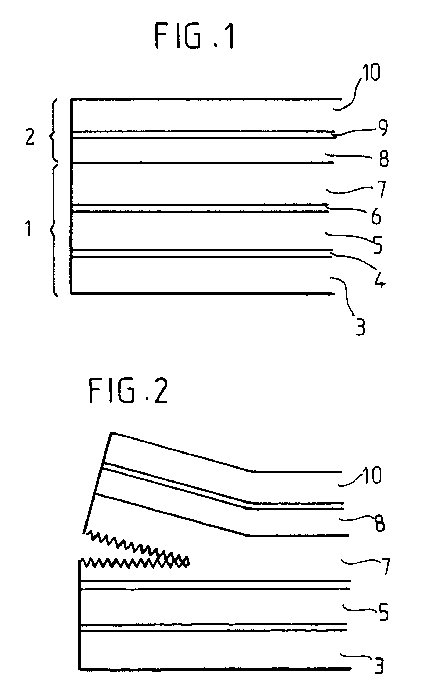

En se reportant à la Fig. 1, on peut voir en 1 la feuille multicouche constituant le récipient, et en 2 la feuille multicouche constituant l'opercule. La feuille 1 se compose, du bas vers le haut, d'une couche de polystyrène 3, d'une couche d'adhésif 4, d'une couche d'éthylvinylalcool 5, d'une couche d'adhésif 6 et d'une couche composite 7 constituée par exemple par un mélange de polyoléfine telle que polyéthylène polypropylène, etc.... et de polystyrène ou de copolymères du styrène.

L'opercule se compose d'une couche 8 de polyéthylène, destinée à être soudée à la couche 7 pour assurer la fermeture du récipient, d'une couche d'adhésif 9, et d'une couche 10 de polyester, par exemple, ou d'aluminium.

La couche composite 7, est une caractéristique de l'invention. En effet, les deux produits qui la constituent par exemple, le polyéthylène et le polystyrène, ne sont pas compatibles et ont des viscosités différentes. De ce fait, ils ne constituent pas une couche homogène.

Lors de l'extrusion, les deux produits sont plus ou moins bien dispersés, la concentration du produit le plus fluide ayant tendance à augmenter à la partie supérieure de la couche jusqu'à présenter à la surface une pellicule quasi continue qui assure la soudabilité avec la couche inférieure de l'opercule.

Il en résulte que la couche composite 7 est bien soudable sur la couche 8 de polyéthylène de l'opercule, en raison de la présence majoritaire de polyéthylène à la surface de la couche 7.

Sur la Fig.2, on peut voir que, lors de l'ouverture du récipient, ce n'est pas la soudure entre les deux couches 7 et 8 qui cède. Au contraire, cette soudure, qui assure l'étanchéité du récipient, est et doit être très solide.

La rupture se produit dans l'épaisseur de la couche composite 7, par décohésion, en raison de l'hétérogénéité de la couche qui entraîne un manque de cohésion.

L'invention tire parti de ce manque de cohésion puisque, lorsque l'on veut enlever l'opercule qui est soudé sur le récipient, on ne détruit pas la soudure elle-même mais on arrache une partie de la couche supérieure.

Si l'opercule est du type composé de couches superposées de polyester, dichlorure de polyvinyle, polyéthylène, ou encore de polyamide, polyéthylène, on choisira une barquette dont la couche présentant peu de cohésion a une peau formée de polyéthylène et est donc compatible avec l'opercule.

A cet effet on peut utiliser une couche formée de polyéthylène de moyenne densité de type TD 0340 et de polystyrène super-choc de type 5340.

Ces produits ont une viscosité (en Pa.s) à un gradient de cisaillement de 100 s⁻¹ et à 200°C de 364,1 pour le poléthylène et de 672,4 pour le polystyrène et une viscosité à un gradient de cisaillement de 1000 s⁻¹ et à 200°C de 114,5 pour le polyéthylène et de 137,7 pour le polystyrène, ce qui amène à avoir une peau de polyéthylène en surface.

Par contre, si l'opercule est constitué d'une feuille d'aluminium recouverte de laque, il est nécessaire, pour pouvoir souder, d'avoir une peau de polystyrène sur le polyéthylène. On inverse alors le régime de viscosité en utilisant un polystyrène ou copolymère de polystyrène plus fluide du type 4520 ou 4801 et une polyoléfine de viscosité plus grande, pour former la couche ayant peu de cohésion.

Le récipient operculé formé en mettant en oeuvre l'invention reste parfaitement fermé tout au long des manipulations nécessaires à sa commercialisation tout en étant d'une ouverture aisée car lorsque l'on applique un effort de traction sur l'opercule, la couche supérieure du récipient se déchire par décohésion, une partie restant liée à l'opercule, et l'autre au récipient.

Selon l'invention, la couche composite comprend une polyoléfine telle que polyéthylène ou polypropylène dans la proportion de 10% à 90% , et du polystyrène ou des copolymères du styrène dans la proportion de 90% à 10%.

En faisant varier les proportions, on modifie les caractéristiques de soudabilité et de déchirabilité de l'opercule.

En augmentant la proportion du produit le plus fluide, on améliore à la fois la soudabilité et la cohésion de la couche, et par là-même, on rend plus difficile l'enlèvement de l'opercule.

En augmentant la proportion du produit le plus visqueux, on diminue sensiblement la soudabilité et la cohésion de la couche, ce qui rend plus facile l'enlévement de l'opercule.

## Revendications

1. Feuille multicouche en matière plastique pour constituer des récipients, destinés à être fermés par un opercule soudé, constitué lui-même d'une feuille multicouche présentant une couche inférieure déstinée à être soudée sur la couche supérieure de ladite feuille, dans laquelle ladite couche supérieure (7) est une couche composite, constituée d'un mélange hétérogène de deux produits à viscosités sensiblement différentes, le produit le plus fluide étant soudable sur la couche inférieure (8) de l'opercule, de telle sorte que, lors de l'enlèvement de l'opercule, la couche composite (7) supérieure de la feuille (1) se déchire dans son épaisseur par décohésion, caractérisée en ce que la couche composite (7) est constituée d'un mélange de polyoléfine et de polystyrène dont le plus visqueux se répartit au milieu de la couche et le plus fluide sur la surface de la couche.

2. Feuille selon la revendication 1, caractérisée en ce que lorsque la couche inférieure de l'opercule est en polyéthylène, le mélange constituant la couche composite comporte un polyéthylène plus fluide que le polystyrène.

3. Récipient en matière plastique formé à partir d'une feuille selon la revendication 1, caractérisé en ce que la couche supérieure composite (7) de la feuille est constituée d'un mélange hétérogène de deux produits, dont le plus fluide est compatible avec la couche inférieure de l'opercule pour assurer le soudage de l'opercule.

4. Récipient selon la revendication 3, caractérisé en ce que la couche composite (7) est constituée d'un mélange de polyoléfine et de polystyrène ayant des coefficients de viscosité différents.

5. Récipient selon la revendication 4, caractérisé en ce que le mélange comporte une polyoléfine et du polystyrène ou un copolymère du styrène, dans des proportions comprises pour chacun entre 10 et 90%.

## Claims

1. A multi-layer sheet of plastics material for forming receptacles intended to be closed by a welded protective cover, itself formed by a multi-layer sheet having a lower layer intended to be welded to the upper layer of said sheet, in which said upper layer (7) is a composite layer, formed of a heterogenous mixture of two products having substantially differing viscosities, the more fluid product being weldable to the lower layer (8) of the protective cover, such that, when the protective cover is removed, the upper composite layer (7) of the sheet (1) is torn in its thickness by loss of cohesion, characterised in that the composite layer (7) is formed of a mixture of polyolefin and polystyrene, the more viscous of which is distributed in the middle of the layer and the more fluid of which on the surface of the layer.

2. A sheet according to Claim 1, characterised in that when the lower layer of the protective cover is made of polyethylene, the mixture forming the composite layer comprises a polyethylene which is more fluid than the polystyrene.

3. A receptacle made of plastics material formed from a sheet according to Claim 1, characterised in that the upper composite layer (7) of the sheet is formed of a heterogenous mixture of two products, the more fluid of which is compatible with the lower layer of the protective cover to ensure the welding of the protective cover.

4. A receptacle according to Claim 3, characterised in that the composite layer (7) is formed of a mixture of polyolefin and polystyrene having different coefficients of viscosity.

5. A receptacle according to Claim 4, characterised in that the mixture comprises a polyolefin and polystyrene or a styrene copolymer, in proportions of between 10 and 90% each.

## Patentansprüche

1. Mehrschichtige Kunststoff-Folie zur Herstellung von Behältern, welche durch einen aufgeschweißten Deckel verschlossen werden sollen, der seinerseits aus einer mehrschichtigen Kunststoff-Folie besteht, welche eine untere Schicht aufweist, die auf die obere Schicht der ersten Folie aufgeschweißt werden soll, wobei diese Oberschicht (7) eine zusammengesetzte Schicht ist, die aus einem heterogenen Gemisch zweier Erzeugnisse erheblich verschiedener Viskosität gebildet ist, wobei das flüssigere Produkt auf die Unterschicht (8) des Deckels aufschweißbar ist, derart, daß beim Anheben des Deckels die zusammengesetzte Oberschicht der Folie (1) durch Dekohäsion in ihrer Dicke einreißt, dadurch gekennzeichnet, daß die zusammengesetzte Schicht (7) durch eine Mischung aus Polyolefin und Polystyren gebildet ist, von denen das viskosere Medium sich in der Mitte der Schicht und das flüssigere Medium auf der Oberfläche der Schicht befindet.

2. Folie nach Anspruch 1, dadurch gekennzeichnet, daß, wenn die untere Schicht des Deckels aus Polyäthylen besteht, die die zusammengesetzte Schicht bildende Mischung ein flüssigeres Polyäthylen als das Polystyren enthält.

3. Behälter aus Kunststoff, hergestellt aus einer Folie nach Anspruch 1, dadurch gekennzeichnet, daß die obere zusammengesetzte Schicht (7) der Folie durch eine heterogene Mischung zweier Erzeugnisse gebildet ist, von denen das flüssigere mit der Unterschicht des Deckels kompatibel ist, um ein Verschweißen des Deckels zu gewährleisten.

4. Behälter nach Anspruch 3, dadurch gekennzeichnet, daß die zusammengesetzte Schicht (7) aus einer Mischung aus Polyolefin und Polystyren besteht, welche Viskositätskoeffizienten unterschiedlicher Größen aufweist.

5. Behälter nach Anspruch 4, dadurch gekennzeichnet, daß die Mischung aus einem Polyolefin und Polystyren oder aus einem Copolymer von Styren besteht, wobei die Gehalte für beide zwischen 10 und 90 % liegen.
